# EUROPEAN PATENT APPLICATION

(11) **EP 0 580 908 A1**
(43) Date of publication of application: **02.02.1994**
(21) Application number: 92307861.2
(22) Date of filing: 28.08.1992
(51) Int. Cl.: G02F 1/1335

(54) **Liquid crystal display device with a back light not more than 7mm in thickness**

(30) Priority: 31.07.1992 JP 204952/92
(71) Applicant: SHARP KABUSHIKI KAISHA, Osaka 545 (JP)
(72) Inventor: Uratani, Shinichi, Osaka-shi, Osaka-fu (JP)
(74) Representative: Brown, Kenneth Richard

(57) **Abstract**

There is provided a liquid crystal display device thinner than 7 mm and yet free from any impairment in either mechanical or optical characteristics. A reflecting plate 27, disposed below a light guide plate 26, is formed of an aluminum plate with an acrylic white reflecting coating on a face confronting the light guide plate 26, the reflectance thereof being approximately 90%. The reflecting plate 27 is integrally press-molded so as to cover over the entire lower face of the light guide plate 26, end faces of the light guide plate 26 other than a light source 29 side end face, and part of the light source 29. A metal angle 24, having an approximately U-shaped cross section, and the reflecting plate 27 sandwich and securely retain the light guide plate 26, a diffusion plate 25, and a liquid crystal display panel 21. A white reflecting coating is provided to the reflecting plate 27, thereby allowing the liquid crystal display device to satisfy its optical characteristic requirements while the light guide plate 26, the diffusion plate 25, and the liquid crystal display panel 21 are sandwiched by the thin reflecting plate 27 and the metal angle 24, thereby allowing the device to satisfy either thickness or mechanical characteristic requirement.

## Description

### BACKGROUND OF THE INVENTION

### 1. Field of the Invention

The present invention relates to a liquid crystal display device with a back light to be used as a display device in a word processor, a personal computer, or the like.

### 2. Description of the Prior Art

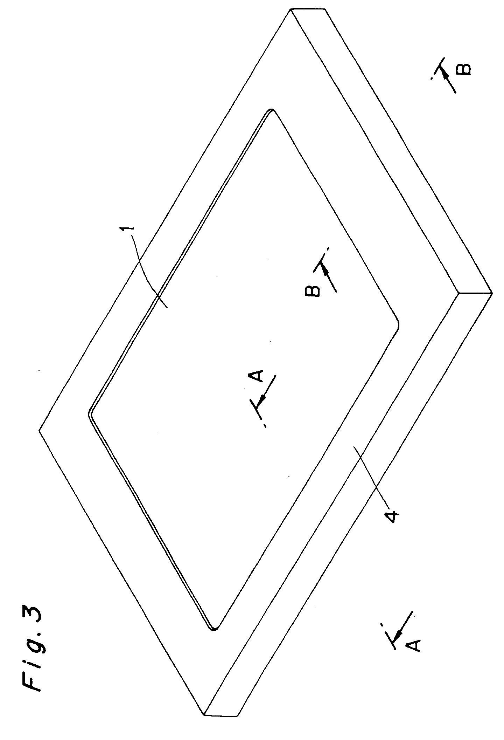

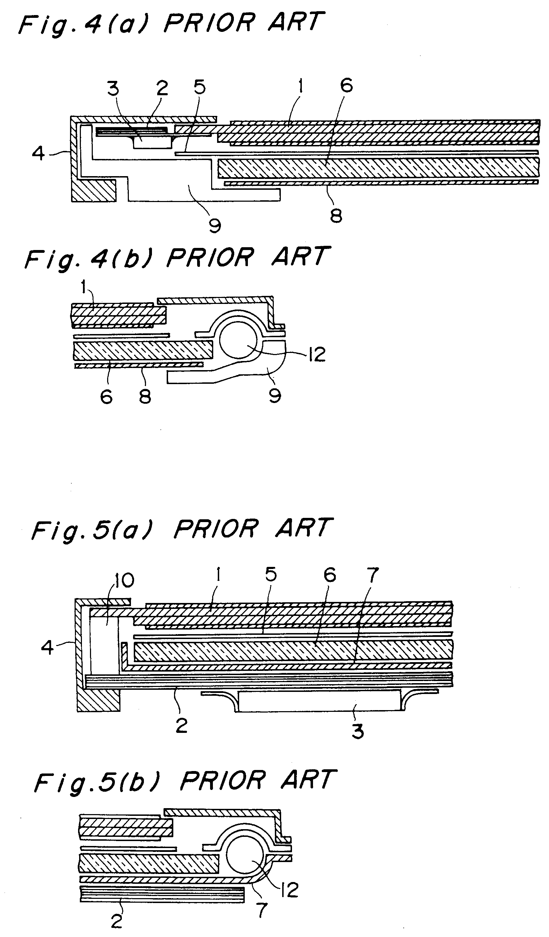

Conventional liquid crystal display devices are shown in their cross sections in Figs. 4 (a) and (b) and 5 (a) and (b). The liquid crystal display devices have a panel shape, their configuration being such that a liquid crystal display panel 1 is fitted into a metal angle 4, as shown in Fig. 3. Fig. 4 (a) and Fig. 5 (a) are sectional views taken along the line A - A in Fig. 3, and Fig. 4 (b) and Fig. 5 (b) are sectional views taken along the line B - B in Fig. 3.

The liquid crystal display device as shown in Figs. 4 (a) and (b) includes: a liquid crystal display panel 1 having liquid crystal drivers 2 and 3 on its periphery; a light guide plate 6 with a thickness of 2 mm and a light transmittance having a diffusion sheet 5 disposed on its surface and a light source 12 disposed in the vicinity of its one end face; and a reflecting plate 8 for, when a beam of light emitted from the light source 12 and propagating within the light guide plate 6 leaks out through the face thereof other than the liquid crystal display panel 1 side face, reflecting the light toward the liquid crystal display panel 1, wherein the liquid crystal display panel 1, the light guide plate 6, and the reflecting plate 8 are retained by a plastic retainer member 9 and the metal angle 4.

Also, the liquid crystal display device as shown in Figs. 5 (a) and (b) include the same light source 12, diffusion sheet 5, and light guide plate 6 as in the liquid crystal display device shown in Figs. 4 (a) and (b). A reflecting plate 7 is made of a metal plate with a white reflecting coating, and below the reflecting plate 7 are disposed liquid crystal drivers 2 and 3. The liquid crystal drivers 2 and 3 are electrically connected to the liquid crystal display panel 1 via a rubber connector 10.

However, the conventional liquid crystal display devices as described above are, in each case, disadvantageous in that the devices cannot be thinned or reduced in weight as much as demanded to such devices on some structural accounts.

To obtain a thinned type liquid crystal display device out of those as shown in Figs. 4 (a) and (b) or Figs. 5 (a) and (b), it is required to reduce all the thicknesses of the liquid crystal display panel 1, the metal angle 4, the diffusion sheet 5, the light guide plate 6, the reflecting plates 7 and 8, the retainer member 9, and the like. The problem in this connection is that if those members were formed simply to be thinner, the resulting liquid crystal display device would be impaired in the mechanical and optical characteristics for such devices.

Mechanical characteristic requirements for liquid crystal display devices are a vibration resistance of 1 G and a shock resistance 50 G at 500 Hz. Further, optical characteristic requirements are a contrast of 12 : 1 and a brightness of 30 nit.

The liquid crystal display device as shown in Figs. 4 (a) and (b) is 7 mm in thickness and that in Figs. 5 (a) and (b) is 10 mm, both meeting the above-mentioned mechanical and optical characteristic requirements. However, if the members of the light guide plate 6, the reflecting plates 7 and 8, the retainer member 9, and the like were simply reduced in thickness so as to attain a thickness of the liquid crystal display device as thin as not more than 5 mm, those mechanical and optical characteristic requirements could no longer be met.

### SUMMARY OF THE INVENTION

The object of the present invention is therefore to provide a liquid crystal display device which is as thin as not more than 7 mm and yet free from any impairment in either mechanical or optical characteristics.

In order to achieve the aforementioned object, there is provided a liquid crystal display device having: a liquid crystal display section in which a liquid crystal driver is disposed on a peripheral portion of a liquid crystal display panel; and a back light section in which a light source is disposed in the vicinity of at least one end face of a light guide plate disposed below the liquid crystal display section, wherein
the liquid crystal display section and the back light section are sandwiched and securely retained by a pair of metal plates.

With the above arrangement, the liquid crystal display section having the liquid crystal driver disposed on the periphery of the liquid crystal display panel, and the back light section having a light source disposed in the vicinity of at least one end face of the light guide plate disposed below the liquid crystal display section are sandwiched and securely retained by the pair of metal plates. Thus, by sandwiching the stacked liquid crystal display section and back light section by the metal plates having superior mechanical characteristics in spite of its thinness, the thin type liquid crystal display device can be provided without reducing the thickness of the liquid crystal display section and the back light section to a considerable extent.

Accordingly, the resulting liquid crystal display device is, even if a thin type, free from any impairment of either mechanical or optical characteristics.

Further, it is preferable that one of the pair of metal plates sandwiching the liquid crystal display section and the back light section is a reflecting plate disposed below the light guide plate so as to reflect light derived from the light guide plate toward the liquid crystal display section.

With this arrangement, the liquid crystal display device can be provided in a thin type without being impaired in its mechanical and optical characteristics, by virtue of its arrangement that one sheet of metal plate serves two functions.

It is also preferable that the reflectance of the reflecting plate is not less than 70%.

With this arrangement, the 70% or more reflectance of the reflecting plate enables the liquid crystal display device to be maintained at a brightness over the specified level.

It is also preferable that a white reflecting layer is formed in the reflecting surface of the reflecting plate.

Then, it is achieved with only a simple method to maintain the brightness at high level.

It is also preferable that the white reflecting layer is formed of a coating layer.

Then, it is achieved with a further simple method to maintain the brightness at high level because the white reflecting layer is formed of a coating layer.

It is also preferable that the metal plate constituting the reflecting plate is formed of aluminium or an aluminum alloy.

With this arrangement, the liquid crystal display device can be reduced in weight.

It is also preferable that the reflecting plate covers over every end face of the light guide plate other than one end face of the light guide plate of the light source side.

With this arrangement, the light leaking out through each end face of the light guide plate is reflected by the reflecting plate, thereby preventing any reduction in brightness at good efficiency.

It is also preferable that the reflecting plate is formed by integral molding so as to cover the entire lower face of the light guide plate, an end face of the light guide plate on the side other than the light source side, and part of the light source;
the light guide plate, a diffusion plate, and the liquid crystal display panel having the liquid crystal driver disposed on its peripheral portion are stacked on the reflecting plate one over another; and wherein
the stacked reflecting plate, light guide plate, diffusion plate, and liquid crystal display panel are sandwiched and securely retained by a metal angle provided with a display window.

With this arrangement, the liquid crystal display device is, even if a thin type, free from any impairment in either mechanical or optical characteristics.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein:
Figs. 1 (a) and (b) are sectional views taken along the lines A - A and B - B in Fig. 3, respectively, showing an embodiment of the liquid crystal display device according to the present invention;
Fig. 2 is a partly sectional view of an embodiment other than in Fig. 1;
Fig. 3 is a perspective view schematically illustrating both the liquid crystal display device of the present invention and liquid crystal display devices of the prior art;
Figs. 4 (a) and (b) are partly sectional views taken along the lines A - A and B - B in Fig. 3 , respectively, showing a conventional liquid crystal display device; and
Figs. 5 (a) and (b) are partly sectional views taken along the lines A-A and B-B in Fig. 3, respectively, showing a conventional liquid crystal display device other than in Figs. 4 (a) and (b).

### DETAILED DESCRIPTION OF THE PREFERRED EMBODIMENTS

The invention will now be described in more detail, referring to the embodiments illustrated in the accompanying drawings.

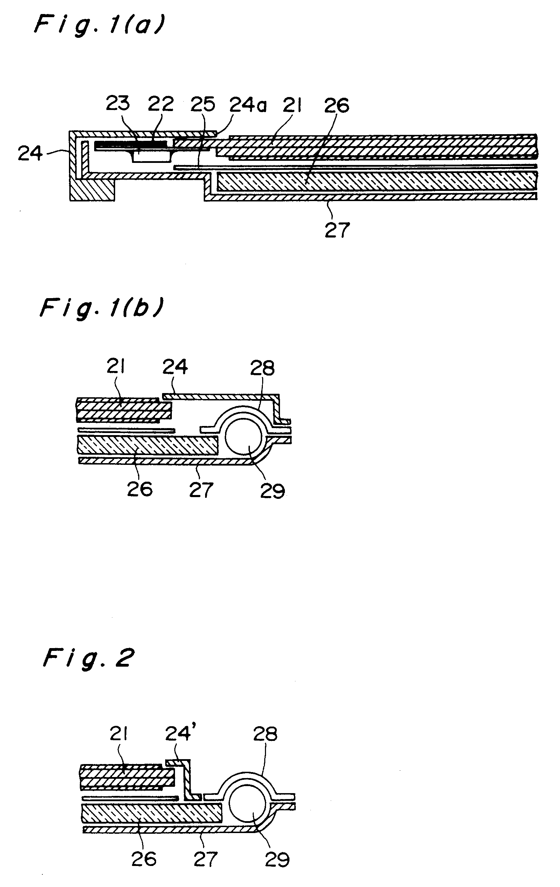

Fig. 1 presents sectional views of a liquid crystal display device of an embodiment according to the present invention. The liquid crystal display device in this embodiment has an appearance as shown in Fig. 3. Fig. 1 (a) is a sectional view taken along the line A - A in Fig. 3 as directed by arrows and Fig. 1 (b) is another taken along the line B - B in Fig. 3 as directed by arrows.

The liquid crystal display device of the present embodiment primarily comprises: a liquid crystal display section composed of a liquid crystal display panel 21, a printed board 22, an LSI (large scale integrated circuit) 23, and the like; and a back light section composed of a diffusion plate 25, a light guide plate 26, a reflecting plate 27, a light source 29, and the like.

On the periphery of the liquid crystal display panel 21 partly constituting the liquid crystal display section, there is disposed a liquid crystal driver made up of a printed board 22 and an LSI 23 for driving the liquid crystal display panel, the liquid crystal driver being electrically connected to the liquid crystal display panel 21.

The back light section is formed below the liquid crystal display section. The light guide plate 26 partly constituting the back light section is formed of a 1.5 mm thick acrylic plate having dot patterns (not shown) provided on its lower face, being stacked at a specified spacing with respect to the lower face of the liquid crystal display panel 21. The light source 29 constituted by a 3 mm dia. cold cathode tube is disposed in the vicinity of one end face of the light guide plate 26.

On the upper face of the light guide plate 26 is stacked a diffusion plate 25 constituted by a 0.1 mm thick polyethylene terephthalate (hereinafter, abbreviated as PET) sheet having a diffusion material coated thereon to thereby impart a diffusion effect.

On the lower face of the light guide plate 26, on the other hand, is stacked a reflecting plate 27 made of a 0.3 mm thick aluminum plate having an acrylic white reflecting coating (not shown) on the face of the side confronting the light guide plate 26. In this connection, the reflectance of the white reflecting coating layer is closely related to the brightness of the optical characteristic of the liquid crystal display device; to obtain a brightness of 30 nit or more, the reflectance is desirably 70% or more (preferably 80% or more). The reflectance of the reflecting plate is set to approximately 90% in this embodiment.

The aluminum plate constituting the reflecting plate 27 is integrally press-molded so as to cover the entire lower face of the light guide plate 26, every end face of the light guide plate 26 except the end face on the light source 29 side, and part of the light source 29. Also the side edge portion of the reflecting plate 27 is bent so as to surround the liquid crystal driver, reaching a side end of the printed board 22.

Further, the peripheral portion of the reflecting plate 27 and the peripheral portion of the liquid crystal display panel 21 are sandwiched by a 0.3 mm thick stainless metal angle 24 which has a window 24a for allowing the liquid crystal display panel 21 to peep out and which has an approximately U-shaped cross section.

Thus, the liquid crystal display device according to the present embodiment is so arranged that the light guide plate 26, the diffusion plate 25, and the liquid crystal display panel 21, stacked one over another, are sandwiched and securely retained by the reflecting plate 27 and the metal angle 24. The resulting liquid crystal display device has mechanical characteristics of a vibration resistance of 1 G and a shock resistance of 50 G at 500 Hz, as good as conventional, and optical characteristics of a contrast of 12 : 1 and a brightness of 50 nit, better than conventional, while it can be provided in a thin type having a thickness of 4.5 mm.

With the above-described arrangement, the light emitted from the light source 29 and the light emitted from the light source 29 and then reflected by a reflecting member 28 enters the light guide plate 26 through one end face of the light guide plate 26, traveling toward the other end face therein in parallel. In this process, the parallel light is scattered by the dot patterns provided to the lower face of the light guide plate 26, part of the light being steered to the liquid crystal display panel 21 through the upper face. Also, the light leaking out through the lower face of the light guide plate 26 is reflected by the reflecting plate 27 to travel across the light guide plate 26, being directed to the liquid crystal display panel 21 through the upper face of the light guide plate 26.

In this way the light derived from the light source 29, now having reached the diffusion plate 25, is thereby diffused enough to remove its directionality, thereafter passing through the liquid crystal display panel 21.

As described above, the liquid crystal display device according to the present embodiment has the same structure as that shown in Fig. 4 except that the plastic retainer member 9 is replaced with a metal plate. Thus, for the liquid crystal display device to have appropriate vibration resistance and shock resistance, the plastic retainer member 9, which needs a good thickness, is replaced with a metal one, which does not, and moreover formed integrally with the reflecting plate 27, whereby inconsistent two attributes, i.e. mechanical strength and thinness, can be satisfied at the same time.

As a result, the liquid crystal display device according to this embodiment can be thinned to a thickness of 4.5 mm while it has mechanical characteristics of a vibration resistance of 1 G and a shock resistance of 50 G at 500 Hz.

Further, the liquid crystal display device of the embodiment is so arranged that the reflecting plate 27 with a reflectance of 90% made of an aluminum plate and an acrylic white reflecting coating formed thereon is disposed below the light guide plate 26. By virtue of this arrangement, the liquid crystal display device has optical characteristics of a contrast of 12 : 1 and a brightness of 50 nit, better than conventional.

As a result, it is possible to provide a liquid crystal display device which is a thin type and yet satisfies the optical characteristic requirements while overcoming the reduction in brightness due to the fact that the thickness of the light guide plate 26 is slightly lessened.

Furthermore, the liquid crystal display device of the above arrangement is covered with a metal entirely except the liquid crystal display section, so that it can prevent any noise from internal and external. Also the plastic member is replaced with an aluminum plate good in heat radiation; thus, the heat dissipated from the light source 29 can be effectively radiated, preventing the liquid crystal display panel 21 from any characteristic change due to heat.

The metal angle 24 in the above embodiment, as shown in Figs. 1 (a) and (b) and 3, is so arranged as to cover the printed board 22, the LSI 23, the light source 29, and the reflecting member 28, except the liquid crystal display panel 21. However, the shape of the metal angle 24 according to the present invention is not limited to this.

For instance, as exemplified by a metal angle 24' shown in Fig. 2, the metal angle 24 may have such a cross section on the light source 29 side that the reflecting member 28 and the light source 29 are exposed to outside, facilitating the radiation of the heat from the light source 29 and the replacement of the light source 29.

The reflecting plate 27 in each embodiment described above is provided by an aluminum plate with a white reflecting coating; nevertheless, the invention is not limited to this arrangement. For instance, it may be provided by stacking a thin reflecting sheet of PET or the like on the surface of the aluminum plate on the light guide plate 26 side. In this case, however, the liquid crystal display device involves a thickness approximately 0.2 mm to 0.3 mm more than in the above embodiment. Further, the aluminum plate may be replaced with an aluminum alloy plate.

As apparent from the foregoing description, the liquid crystal display device according to the present invention comprises a liquid crystal display section, which has a liquid crystal driver disposed on the periphery of a liquid crystal display panel, and a back light section, which has a light source disposed in the vicinity of at least one end face of a light guide plate, the liquid crystal display section and the back light section being sandwiched and securely retained by a pair of metal plates, whereby it is made possible to provide a thin type liquid crystal display device without the need of considerably thinning the liquid crystal display section and the back light section.

Therefore, according to the invention, a liquid crystal display device can be provided which is thinner than 7 mm, a thickness of the conventional counterpart, and yet which is free from any impairment in either mechanical or optical characteristics.

Further, the liquid crystal display device according to an embodiment of the invention is so arranged that one of a pair of metal plates for sandwiching the liquid crystal display section and the back light section is provided by a reflecting plate disposed below the light guide plate, whereby the two functions, reflecting the light emitted from the light guide plate and sandwiching the liquid crystal display section and the back light section, can be performed by one sheet of metal plate.

Therefore, according to this embodiment, a liquid crystal display device can be easily provided which is thinner than 7 mm and yet free from any impairment in either mechanical or optical characteristics.

Also, the liquid crystal display device according to an embodiment of the invention is so arranged that the reflectance of the reflecting plate is 70% or more, whereby a liquid crystal display device can be provided which has a brightness higher than specified level and thinner than 7 mm without being impaired in its mechanical characteristics.

Also, the liquid crystal display device according to an embodiment of the invention is so arranged that a white reflecting layer is formed on the reflecting surface of the reflecting plate, whereby a liquid crystal display device can be provided which is high in brightness and thin in thickness without being impaired in its mechanical characteristics.

Also, the liquid crystal display device according to an embodiment of the invention is so arranged that the white reflecting layer is formed by coating, whereby a liquid crystal display device can be even easily provided which is high in brightness and thin in thickness without being impaired in its mechanical characteristics.

Also, the liquid crystal display device according to an embodiment of the invention is so arranged that the metal plate constituting the reflecting plate is formed of aluminium or an aluminum alloy, whereby a liquid crystal display device can be provided which is thinner than 7 mm and yet free from any impairment in either mechanical or optical characteristics and moreover which is lightweight.

Also, the liquid crystal display device according to an embodiment of the invention is so arranged that the reflecting plate covers over every end face of the light guide plate except the one end face on the light source side, whereby a liquid crystal display device can be provided which is a thin type and efficiently enhanced in brightness without being impaired in its mechanical characteristics.

Also, the liquid crystal display device according to an embodiment of the invention is so arranged that the reflecting plate is formed by integral molding so as to cover the entire lower face of the light guide plate, an end face of the light guide plate on the side other than the light source side, and part of the light source; the light guide plate, a diffusion plate, and the liquid crystal display panel having the liquid crystal driver disposed on its peripheral portion are stacked on the reflecting plate one over another; and wherein the stacked reflecting plate, light guide plate, diffusion plate, and liquid crystal display panel are sandwiched and securely retained by a metal angle provided with a display window. Thus, the liquid crystal display device can be easily provided which is a thin type, not more than 7 mm, and yet free from any impairment in either mechanical or optical characteristics.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A liquid crystal display device having: a liquid crystal display section in which a liquid crystal driver (22, 23) is disposed on a peripheral portion of a liquid crystal display panel (21); and a back light section in which a light source (29) is disposed in the vicinity of at least one end face of a light guide plate (26) disposed below the liquid crystal display section, wherein
the liquid crystal display section and the back light section are sandwiched and securely retained by a pair of metal plates (24, 24', 27).

2. The liquid crystal display device as claimed in claim 1, wherein
one of a pair of the metal plates (24, 24', 27) for sandwiching the liquid crystal display section and the back light section is a reflecting plate (27) disposed below the light guide plate (26) so as to reflect light derived from the light guide plate (26) toward the liquid crystal display section.

3. The liquid crystal display device as claimed in claim 2, wherein
a reflectance of the reflecting plate (27) is 70% or more.

4. The liquid crystal display device as claimed in claim 2, wherein
a white reflecting layer is formed in a reflecting face of the reflecting plate (27).

5. The liquid crystal display device as claimed in claim 4, wherein
the white reflecting layer is formed by coating.

6. The liquid crystal display device as claimed in claim 2, wherein
the metal plate constituting the reflecting plate (27) is formed from aluminium or an aluminum alloy.

7. The liquid crystal display device as claimed in claim 2, wherein
the reflecting plate (27) is so arranged as to cover over every face of the light guide plate (26) other than one end face of the light guide plate (26) of the light source side.

8. The liquid crystal display device as claimed in claim 2, wherein
the reflecting plate (27) is formed by integral molding so as to cover the entire lower face of the light guide plate (26), an end face of the light guide plate (26) on the side other than the light source side, and part of the light source (29);
the light guide plate (26), a diffusion plate (25), and the liquid crystal display panel (21) having the liquid crystal driver (22, 23) disposed on its peripheral portion are stacked on the reflecting plate (27) one over another; and wherein
the stacked reflecting plate (27), light guide plate (26), diffusion plate (25), and liquid crystal display panel (21) are sandwiched and securely retained by a metal angle (24) provided with a display window (24a).
